# EUROPÄISCHE PATENTSCHRIFT

(11) **EP 2 269 021 B1**
(45) Veröffentlichungstag und Bekanntmachung des Hinweises auf die Patenterteilung: **30.08.2017**
(21) Anmeldenummer: 09735047.4
(22) Anmeldetag: 03.04.2009
(51) Int. Cl.: G01M 3/00

(54) **VERFAHREN UND VORRICHTUNG ZUR DICHTIGKEITSPRÜFUNG VON BEHÄLTERN**
METHOD AND DEVICE FOR CHECKING THE TIGHTNESS OF CONTAINERS
PROCÉDÉ ET DISPOSITIF DE CONTRÔLE D'ÉTANCHÉITÉ DE RÉCIPIENTS

(30) Priorität: 22.04.2008 DE 102008020273
(43) Veröffentlichungstag der Anmeldung: 05.01.2011
(73) Patentinhaber: KHS GmbH, 44143 Dortmund (DE)
(72) Erfinder: MONZEL, Alois, 67591 Mörstadt (DE)
(86) Internationale Anmeldenummer: PCT/EP2009/002490
(87) Internationale Veröffentlichungsnummer: WO 2009/129922

(56) Entgegenhaltungen:
- WO-A-2005/071391
- WO-A1-2006/064237
- DE-U1- 9 313 923
- JP-A- 58 108 442
- US-A- 5 193 014

## Beschreibung

Die Erfindung betrifft ein Verfahren zur Dichtigkeitsprüfung von Behältern, wonach wenigstens eine Behälteröffnung im Hinblick auf eventuell austretende Flüssigkeit optisch mit einer oder mehreren Kameras mit Methoden der Bildverarbeitung abgetastet wird.

Es ist aus der Praxis und durch die DE 43 43 750 A1 ein derartiges Verfahren zur Dichtigkeitsprüfung von Behältern bekannt, bei welchem die Behälteröffnungen bzw. ein an dieser Stelle meistens vorgesehener Verschluss dahingehend überprüft wird, ob der Behälter insgesamt dicht verschlossen ist. Denn nach dem Befüllen werden die betreffenden Behälter respektive Kegs verladen und beispielsweise an Gaststätten ausgeliefert. In diesem Zusammenhang ist es erforderlich, dass der jeweilige Behälter dicht ist und die eingefüllte Flüssigkeit, in der Regel Bier, nicht über die eine oder die mehreren Behälteröffnungen austritt.

Dazu wird im Stand der Technik mit Hilfe optischer Abtastverfahren überprüft, ob die fragliche Flüssigkeit oder auch Schaum im Falle von Bier aus der Behälteröffnung oder an dem Verschluss austritt. Diese Prüfung setzt letztlich voraus, dass sich durch die austretende Flüssigkeit bzw. den austretenden Schaum gegenüber dem Untergrund ein Kontrast ergibt, so dass sich die optischen Eigenschaften des Behälters im Bereich der Behälteröffnung oder an oder auf dem Verschluss ändern. Nur dann wird der Austritt von Flüssigkeit und/oder Schaum im Beispielfall sicher detektiert. Hier ergeben sich insofern Schwierigkeiten, als oftmals die Änderung der optischen Eigenschaften des Behälters zumindest im Bereich der Behälteröffnung oder an oder auf dem Verschluss nicht so signifikant sind bzw. so deutlich zu Tage treten, dass eine sichere Aussage über den Flüssigkeitsaustritt getroffen werden kann.

Im Rahmen der US 5 193 014 geht es um die Anbringung von einem Hologramm oder einem Beugungsgitter auf einer Metalldose. Dazu wird das Hologramm bzw. das Beugungsgitter auf die Dose aufgeprägt und kann eine Änderung des Innendruckes innerhalb der Dose auf diese Weise erfasst werden. Dazu wird ein Laserstrahl auf das Beugungsgitter gerichtet und werden hieraus resultierende Moire-Interferenzen ausgewertet.

Der Erfindung liegt das technische Problem zugrunde, ein derartiges Verfahren zur Dichtigkeitsprüfung von Behältern so weiter zu entwickeln, dass der Austritt von Flüssigkeit (oder auch von Schaum) sicher detektiert und erfasst werden kann. Außerdem soll eine geeignete Vorrichtung zur Verfügung gestellt werden.

Zur Lösung dieser technischen Problemstellung ist Gegenstand der Erfindung ein Verfahren nach Anspruch 1 sowie eine Behandlungsvorrichtung nach Anspruch 7.

Im Rahmen der Erfindung wird also der Mehrweg-Großbehälter bzw. Behälter wenigstens im Bereich der Behälteröffnung mit dem fraglichen Kontrastbereich ausgerüstet. Das Gleiche gilt alternativ oder zusätzlich für den die Behälteröffnung verschließenden Verschluss. Selbstverständlich sind die beschriebenen Maßnahmen nicht auf eine Behälteröffnung und einen Verschluss beschränkt, sondern können mit dem fraglichen Kontrastbereich sämtliche Behälteröffnungen und/oder sämtliche Verschlüsse des zu prüfenden Behälters ausgerüstet werden.

Bei diesem Kontrastbereich handelt es sich nun um einen solchen Flächenabschnitt, der eine optisch abweichende Oberflächenstruktur und/oder Oberflächenfarbgestaltung im Vergleich zu der sonstigen ihn umgebenden Oberfläche besitzt. Der Begriff Kontrastbereich drückt dabei ergänzend aus, dass der Kontrastbereich im Hinblick auf seine Oberflächenstruktur und/oder Oberflächengestaltung kontrastierend im Vergleich zu der sonstigen Oberfläche und/oder der im Behälter aufgenommenen Flüssigkeit ausgebildet ist. Im einfachsten Fall reicht es also aus, dass der Kontrastbereich optisch kontrastierend im Vergleich zu der ihn umgebenden Oberfläche gestaltet Ist. Ergänzend oder alternativ kann der Kontrastbereich aber auch so ausgebildet werden, dass sich der gewünschte optische Kontrast- erst - dann ergibt, wenn die im Behälter aufgenommene Flüssigkeit austritt bzw. im Vergleich zu der im Behälter aufgenommenen Flüssigkeit.

Hierzu schlägt die Erfindung im Detail vor, dass der Kontrastbereich beispielsweise durch mechanische und/oder elektrische und/oder chemische oder eine vergleichbare Bearbeltung der Oberfläche im Bereich der Behälteröffnung und/oder am oder auf dem Verschluss definiert wird. Bei einer mechanischen Bearbeitung zur Definition des Kontrastbereiches wird beispielsweise so vorgegangen, dass die Oberfläche des Behälters zumindest im Bereich der Behälteröffnung oder die Oberfläche des Verschlusses im einfachsten Fall aufgeraut wird. Jedenfalls lassen sich die Reflexionseigenschaften der Oberfläche im Kontrastbereich im Vergleich zu der sonstigen Oberfläche ändern. Ist die Oberfläche des Behälters und/oder des Verschlusses beispielsweise mehr oder minder stark reflektierend ausgestaltet, so wird der Kontrastbereich beispielsweise dadurch definiert, dass die Oberfläche an dieser Stelle eine Mattierung erfährt und sich somit die Reflexionseigenschaften ändern.

Darüber hinaus ist es natürlich auch denkbar, allgemein das Streuverhalten der Oberfläche im Bereich des Kontrastbereiches zu ändern. Hier empfehlen sich beispielsweise Gravurverfahren mit einem Laser oder durch Aufbringen eines mechanischen Stempels. Auch eine elektrische Bearbeitung im Sinne einer Funkenerosion ist denkbar, um die Oberfläche im Kontrastbereich im Vergleich zu der übrigen Oberfläche hinsichtlich ihrer optischen Eigenschaften zu verändern. Ebenso eine chemische Bearbeitung im Sinne einer Ätzbehandlung oder dergleichen. Dabei lassen sich die vorbeschriebenen Verfahren und Vorgehensweisen selbstverständlich kombinieren.

Darüber hinaus ist es alternativ oder zusätzlich denkbar, dass der Kontrastbereich durch einen Auftrag auf die Oberfläche im Bereich der Behälteröffnung und/oder am Verschluss definiert wird. Wie im Falle der Definition des Kontrastbereiches durch eine mechanische und/oder elektrische und/oder chemische Bearbeitung sorgt der Auftrag dafür, dass sich die optischen Eigenschaften der Oberfläche im Kontrastbereich im Vergleich zur umgebenden Oberfläche ändern. Bei den besagten Änderungen der optischen Eigenschaften handelt es sich meistens um Variationen im Reflexionsverhalten. Streuverhalten, in der Farbgebung usw. Tatsächlich lässt sich mit einem solchen Auftrag insbesondere die Farbe im Kontrastbereich gegenüber der übrigen Oberfläche ändern.

Im Übrigen hat es sich als günstig erwiesen, wenn der Kontrastbereich über ein bestimmtes und vorgegebenes Muster verfügt. Denn dieses Muster lässt sich von einer optischen Abtasteinrichtung problemlos erkennen und auswerten. Sobald sich Änderungen an dem Muster hinsichtlich dessen Farbe, der Reflexionseigenschaften, des Streuverhaltens oder vergleichbarer optischer Eigenschaften ergeben, ist die optische Abtasteinrichtung unmittelbar in der Lage, hieraus auf beispielsweise austretende Flüssigkeit oder auch austretenden Schaum (im Falle der Abfüllung von Bier) rückzuschließen. Dabei hat es sich insgesamt bewährt, wenn als optische Abtasteinrichtung ein oder mehrere

Kameras, insbesondere CCD-Kameras, zum Einsatz kommen, also beispielsweise mit Methoden der Bildverarbeitung gearbeitet wird.

Gegenstand der Erfindung ist auch eine Behandlungsvorrichtung für Behälter bzw. Mehrweg-Großbehälter, wie sie im Anspruch 7 beschrieben wird. Die Behandlungsvorrichtung kann nach dem bereits behandelten Verfahren arbeiten. Das ist allerdings nicht zwingend.

Bei den angesprochenen Behältern bzw. Mehrweg-Großbehältern kann es sich grundsätzlich um jedwede Behälter handeln, in die Flüssigkeiten, insbesondere Getränke, abgefüllt werden. Meistens ist der Behälteröffnung ein Verschluss zugeordnet.

Das beschriebene Verfahren und die Vorrichtung kommen überwiegend bei Mehrweg-Getränkegroßbehältern zum Einsatz, also Getränkebehältern mit einem großen und für den unmittelbaren Verbrauch nicht geeigneten Fassungsvermögen von mehr als 5 Litern oder mehr als 10 Litern. Dabei geht es um Getränkegroßbehälter, die im Rahmen eines Mehrwegsystems gefüllt, entieert, gereinigt, erneut befüllt usw. werden, Meistens werden Keg-Fässer eingesetzt, also Mehrwegfässer, welche speziell zum industriellen Befüllen und der keimfreien Lagerung von Getränken ent-tretende Flüssigkeit, Schaum, Blasen etc. verändert haben. Eine solche Vorgehensweise ist den bisherigen Verfahren deutlich überlegen, weil der Kontrastbereich für eine einwandfreie optische Erkennung sorgt.

Denn der Kontrastbereich ist so gestaltet, dass er mit der übrigen Oberfläche kontrastiert und/oder zusätzlich mit der im Behälter aufgenommenen Flüssigkeit oder allgemein den austretenden Medien. Dabei lässt sich der Kontrastbereich im einfachsten Fall durch Lasergravieren definieren, wobei diese Methode zudem die Möglichkeit eröffnet, den Kontrastbereich mit einem bestimmten Muster zu flankieren. Das alles lässt sich schnell und kostengünstig realisieren, so dass in der Praxis ein enormer Nutzen beobachtet wird. Dies auch deshalb, weil letztlich der Programmieraufwand deutlich verringert ist und die Rechnerzeit zur Erkennung von Undichtigkeiten kürzer bemessen ist. Als Folge hiervon lassen sich die Taktzeiten verkürzen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: eine erfindungsgemäße Behandlungsvorrichtung und
- **Fig. 2**: den Behälter im Detail.

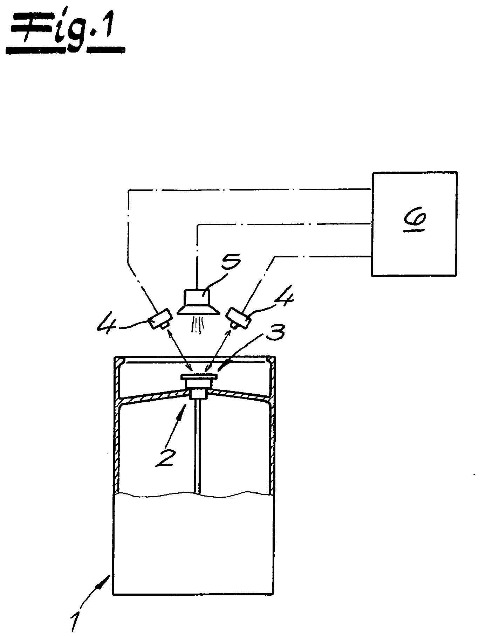

In der Fig. 1 ist eine Behandlungsvorrichtung für Behälter 1 dargestellt. Bei den Behältern 1 handelt es sich im Ausführungsbeispiel und nicht einschränkend um Keg-Fässer, die nach der Reinigung mit einem Getränk, beispielsweise Bier, gefüllt und verschlossen worden sind. Die Befüllung des Behälters 1 erfolgt dabei durch wenigstens eine Behälteröffnung 2, die mit einem Verschluss 3 nach dem Füllvorgang verschlossen wird. Im Rahmen der dargestellten Behandlungsvorrichtung findet nun eine Dichtigkeitsprüfung des Behälters 1 dergestalt statt, dass auf optischem Wege überprüft wird, ob aus der Behälteröffnung 2 eventuell Flüssigkeit oder andere Medien wie Schaum oder auch Blasen im Falle der Abfüllung von Bier austreten.

Zu diesem Zweck verfügt die Behandlungsvorrichtung über eine optische Abtasteinrichtung 4, 5, die sich im Rahmen des Ausführungsbeispiels aus zwei auf den Verschluss 3 bzw. die Behälteröffnung 2 gerichteten (CCD-)Kameras 4 und einer (weißen) Lichtquelle 5 zusammensetzt. Die optische Abtasteinrichtung 4, 5 ist an eine Steuereinheit 6 angeschlossen, die mit einer bildverarbeitenden Software eventuelle Änderungen der optischen Eigenschaften des Behälters 1 im Bereich der Behälteröffnung 2 und/oder an oder auf dem Verschluss 3 durch austretende Medien wie beispielsweise Schaum, Blasen, Flüssigkeit etc. detektiert.

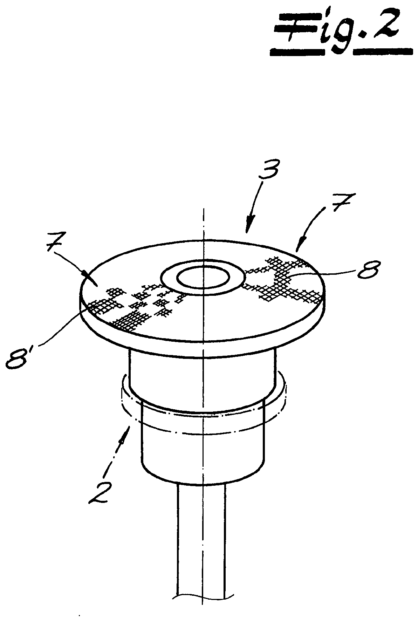

Um die Änderung der optischen Eigenschaften des Behälters 1 im Bereich der Behälteröffnung 2 und/oder an oder auf dem Verschluss 3 einfach erfassen zu können, verfügt der Behälter 1 zumindest im Bereich der Behälteröffnung 2 und/oder an dem Verschluss 3 über einen Kontrastbereich 7. Im Ausführungsbeispiel und nicht einschränkend ist lediglich der als Fitting ausgeführte Verschluss 3 an seiner Oberfläche mit dem fraglichen und in Fig. 2 zu erkennenden Kontrastbereich 7 ausgerüstet. Dieser Kontrastbereich 7 verfügt über eine von der sonstigen Oberfläche des Verschlusses 3 im Beispielfall abweichende Oberflächenstruktur und/oder Oberflächenfarbgestaltung.

Zu diesem Zweck ist der Verschluss 3 bzw. das Fitting aus Edelstahl an seiner Oberfläche hinsichtlich der optischen Reflexionseigenschaften durch eine Lasergravur verändert worden und weist in diesem Zusammenhang ein bestimmtes und durch die Führung des Lasers vorgegebenes Muster 8, 8' auf. Tatsächlich erkennt man in der Fig. 2 exemplarisch zwei verschiedene geometrische Muster 8, 8', die sich unschwer mit Hilfe eines Lasers auf der Oberfläche des Verschlusses 3 durch eine entsprechende CNC-Führung definieren lassen.

Anstelle einer solchen mechanischen Bearbeitung der Oberfläche des Verschlusses 3 bzw. des Fittings 3 kann alternativ auch ein (Farb-)Auftrag auf dem Verschluss 3 aufgebracht werden, was allerdings nicht dargestellt ist. In jedem Fall ändern sich durch den definierten Kontrastbereich 7 bzw. die in diesem Zusammenhang erzeugten Muster 8, 8' die optischen Eigenschaften der Oberfläche des Verschlusses 3. Diese gezielte Änderung der optischen Eigenschaften im Kontrastbereich 7 kann genutzt werden, um eventuell am Verschluss 3 aus dem Behälter 1 austretende Medien zu erfassen.

Denn der Kontrastbereich 7 ist im Hinblick auf seine Oberflächenstruktur kontrastierend nicht nur im Vergleich zu der sonstigen Oberfläche des Verschlusses 3 bzw. des Behälters 1 ausgestaltet worden, sondern auch im Hinblick auf die aus dem Behälter 1 austretenden Medien. Jedenfalls lässt sich aus dem Behälter 1 austretendes Bier oder auch Schaum eindeutig und schnell mit Hilfe der optischen Abtasteinrichtung 4, 5 erfassen, weil durch das Bier bzw. den Schaum die optischen Eigenschaften des Musters 8, 8' im Beispielfall geändert werden und sich diese Änderungen mit Hilfe der Steuereinheit 6 bzw. durch die dort hinterlegte Software zur Bildverarbeitung unschwer registrieren lassen.

Dabei versteht es sich abschließend und ergänzend, dass mit Hilfe der Lichtquelle 5 die Detektion noch weiter verfeinert werden kann. So ist es denkbar, dass die Lichtquelle 5 beispielsweise die austretende Flüssigkeit zum Leuchten (vgl. Fluoressenz) anregt, was den Kontrast zum Kontrastbereich 7 noch weiter steigert.

## Patentansprüche

1. Verfahren zur Dichtigkeitsprüfung von Mehrweg-Großbehältern wie Kegs (1) oder dergleichen, wonach
- wenigstens eine Behälteröffnung (2) im Hinblick auf eventuell austretende Flüssigkeit optisch mit einer oder mehreren Kameras (4) mit Methoden der Bildverarbeitung abgetastet wird, **dadurch gekennzeichnet, dass**
- der Mehrweg-Großbehälter zumindest im Bereich der Behälteröffnung (2) und/oder an seinem Verschluss (3) mit einem Kontrastbereich (7) ausgerüstet wird, wobei
- der Kontrastbereich (7) eine von der sonstigen Oberfläche abweichende Oberflächenstruktur und/oder Oberflächenfarbgestaltung aufweist sowie ergänzend kontrastierend im Vergleich zu der im Mehrweg-Großbehälter aufgenommenen Flüssigkeit ausgebildet wird.

2. Verfahren nach Anspruch 1, **dadurch gekennzeichnet, dass** der Kontrastbereich (7) im Hinblick auf seine Oberflächenstruktur und/oder Oberflächenfarbgestaltung kontrastierend im Vergleich zu der sonstigen Oberfläche und/oder den aus dem Behälter (1) austretenden Medien ausgebildet ist.

3. Verfahren nach Anspruch 1 oder 2, **dadurch gekennzeichnet, dass** der Kontrastbereich (7) durch mechanische und/oder elektrische und/oder chemische Bearbeitung der Oberfläche im Bereich der Behälteröffnung (2) und/oder am Verschluss (3) definiert wird.

4. Verfahren nach einem der Ansprüche 1 bis 3, **dadurch gekennzeichnet, dass** der Kontrastbereich (7) durch einen Auftrag auf die Oberfläche im Bereich der Behälteröffnung (2) und/oder am Verschluss (3) definiert wird.

5. Verfahren nach einem der Ansprüche 1 bis 4, **dadurch gekennzeichnet, dass** im Kontrastbereich (7) die Reflexionseigenschaften, die Farbe, das Streuverhalten oder dergleichen optische Eigenschaften der übrigen Oberfläche verändert werden.

6. Verfahren nach einem der Ansprüche 1 bis 5, **dadurch gekennzeichnet, dass** der Kontrastbereich (7) ein bestimmtes Muster (8, 8') aufweist, welches von einer optischen Abtasteinrichtung (4, 5) erkannt und ausgewertet wird.

7. Behandlungsvorrichtung für Mehrweg-Großbehälter wie Kegs (1) oder dergleichen zur Aufnahme von Flüssigkeit, vorzugsweise zur Durchführung des Verfahrens nach einem der Ansprüche 1 bis 6, mit
- einer optischen Abtasteinrichtung (4, 5) mit einer oder mehreren Kameras (4) sowie Methoden der Bildverarbeitung zur Überprüfung der Dichtigkeit des Behälters (1) wenigstens im Bereich einer Behälteröffnung (2) im Hinblick auf eventuell austretende Flüssigkeit, **dadurch gekennzeichnet, dass**
- mittels der optischen Abtasteinrichtung (4, 5) ein Kontrastbereich (7) Im Bereich der Behälteröffnung (2) und/ oder an einem Verschluss (3) des Mehrwerg-Großbehälters (1) dahingehend überprüft wird, ob sich hierauf aus dem Mehrweg-Großbehälter (1) austretende Flüssigkeit befindet, und wobei
- der Kontrastbereich (7) mit von der sonstigen Oberfläche abweichender Oberflächenstruktur und/oder Oberflachenfarbgestaltung sowie kontrastierender Ausbildung im Vergleich zu der im Mehrweg-Großbehälter aufgenommene Flüssigkeit ausgerüstet ist.

8. Behandlungsvorrichtung nach Anspruch 7, **dadurch gekennzeichnet, dass** die optische Abtasteinrichtung (4, 5) als Bilderkennungsvorrichtung ausgebildet ist oder eine solche beinhaltet.

9. Behandlungsvorrichtung nach Anspruch 7 oder 8, **dadurch gekennzeichnet, dass** der Kontrastbereich (7) ein Muster (8, 8'), Insbesondere geometrisches Muster (8, 8'), aufweist.

## Claims

1. Method for checking the tightness of reusable large containers such as kegs (1) or the like, according to which
- at least one container opening (2) is optically scanned with regard to possibly escaping liquid by one or more cameras (4) with image-processing methods, **characterised in that**
- the reusable large container is equipped at least in the region of the container opening (2), and/or at its closure element (3), with a contrast region (7), wherein
- the contrast region (7) comprises a surface structure and/or surface colour configuration which differs from the remaining surface, as well as additionally contrasting in comparison with the liquid contained in the reusable large container.

2. Method according to claim 1, **characterised in that** the contrast region (7) is configured with regard to its surface structure and/or surface colour configuration such as to be contrasting in comparison with the remaining surface and/or the media emerging from the container (1).

3. Method according to claim 1 or 2, **characterised in that** the contrast region (7) is defined by mechanical and/or electrical and/or chemical processing of the surface in the region of the container opening (2) and/or at the closure element (3).

4. Method according to any one of claims 1 to 3, **characterised in that** the contrast region (7) is defined by an application onto the surface in the region of the container opening (2) and/or at the closure element (3).

5. Method according to any one of claims 1 to 4, **characterised in that** the reflection properties, the colour, the scattering behaviour, or the like optical properties of the other surface area are changed in the contrast region (7).

6. Method according to any one of claims 1 to 5, **characterised in that** the contrast region (7) exhibits a specific pattern (8, 8'), which is identified and evaluated by an optical scanning device (4, 5).

7. Processing device for reusable large containers such as kegs (1) or the like, for accommodating liquid, preferably for carrying out the method according to any one of claims 1 to 6, with
- an optical scanning device (4, 5) with one or more cameras (4), as well as image-processing methods for checking the tightness of the container (1) at least in the region of a container opening (2) in respect of possibly escaping liquid, **characterised in that**
- by means of the optical scanning device (4, 5), a contrast region (7) in the area of the container opening (2) and/or at a closure element (3) of the reusable large container (1) is thoroughly checked as to whether there is liquid escaping from the reusable large container (1), and wherein
- the contrast region (7) is provided with a surface structure and/or surface colour configuration which differs from the remaining surface, as well as with a contrasting configuration in comparison with the liquid contained in the reusable large container.

8. Processing device according to claim 7, **characterised in that** the optical scanning device (4, 5) is configured as an image recognition device or contains such a device.

9. Processing device according to claim 7 or 8, **characterised in that** the contrast region (7) comprises a pattern (8, 8'), in particular a geometric pattern (8, 8').

## Revendications

1. Procédé servant à contrôler l'étanchéité de contenants de grande taille réutilisables tels que des fûts (1) ou similaires, selon lequel
- au moins une ouverture de contenant (2) est balayée de manière optique avec une ou plusieurs caméras (4) avec des méthodes de traitement d'image concernant une sortie éventuelle de liquide, **caractérisé en ce que**
- le contenant de grande taille réutilisable est équipé d'une zone de contraste (7) au moins dans la zone de l'ouverture de contenant (2) et/ou au niveau de sa fermeture (3), dans lequel
- la zone de contraste (7) présente une structure de surface et/ou une configuration de couleur de surface divergeant de la surface restante et est également réalisée en complément de manière à contraster en comparaison avec le liquide reçu dans le contenant de grande taille réutilisable.

2. Procédé selon la revendication 1, **caractérisé en ce que** la zone de contraste (7) est réalisée de manière à contraster concernant sa structure de surface et/ou sa configuration de couleur de surface en comparaison avec la surface restante et/ou avec les milieux sortant du contenant (1).

3. Procédé selon la revendication 1 ou 2, **caractérisé en ce que** la zone de contraste (7) est définie par un traitement mécanique et/ou électrique et/ou chimique de la surface dans la zone de l'ouverture de contenant (2) et/ou au niveau de la fermeture (3).

4. Procédé selon l'une quelconque des revendications 1 à 3, **caractérisé en ce que** la zone de contraste (7) est définie par une application sur la surface dans la zone de l'ouverture de contenant (2) et/ou au niveau de la fermeture (3).

5. Procédé selon l'une quelconque des revendications 1 à 4, **caractérisé en ce que** les propriétés réfléchissantes, la couleur, le comportement de diffusion ou des propriétés optiques similaires du reste de la surface sont modifiés dans la zone de contraste (7).

6. Procédé selon l'une quelconque des revendications 1 à 5, **caractérisé en ce que** la zone de contraste (7) présente un motif (8, 8') défini, qui est identifié et évalué par un système de balayage (4, 5) optique.

7. Dispositif de traitement pour des contenants de grande taille réutilisables tels que des fûts (1) ou similaires servant à recevoir du liquide, de préférence servant à mettre en oeuvre le procédé selon l'une quelconque des revendications 1 à 6, comprenant :
- un système de balayage (4, 5) optique comprenant une ou plusieurs caméras (4) ainsi que des méthodes de traitement d'image servant à contrôler l'étanchéité du contenant (1) au moins dans la zone d'une ouverture de contenant (2) concernant la sortie éventuelle de liquide, **caractérisé en ce que**
- une zone de contraste (7) est contrôlée au moyen du système de balayage (4, 5) dans la zone de l'ouverture de contenant (2) et/ou au niveau d'une fermeture (3) du contenant de grande taille réutilisable (1) pour évaluer si du liquide sortant du contenant de grande taille réutilisable (1) s'y trouve, et dans lequel
- la zone de contraste (7) est équipée de la structure de surface et/ou de la configuration de couleur de surface divergeant de la surface restante ainsi qu'une réalisation contrastante en comparaison avec le liquide reçu dans le contenant de grande taille réutilisable.

8. Dispositif de traitement selon la revendication 7, **caractérisé en ce que** le système de balayage (4, 5) optique est réalisé sous la forme d'un dispositif d'identification d'image ou contient un dispositif de ce type.

9. Dispositif de traitement selon la revendication 7 ou 8, **caractérisé en ce que** la zone de contraste (7) présente un motif (8, 8'), en particulier un motif (8, 8') géométrique.
